# EUROPEAN PATENT SPECIFICATION

(11) **EP 0 573 304 B1**
(45) Date of publication and mention of the grant of the patent: **20.08.1997**
(21) Application number: 93304362.2
(22) Date of filing: 04.06.1993
(51) Int. Cl.: C09D 183/04, C08J 7/04

(54) **Coating composition and lens coated therewith**
Beschichtungszusammensetzung und beschichtete Linse
Compositions de revêtement et lentilles portant un revêtement

(30) Priority: 04.06.1992 JP 143065/92
(43) Date of publication of application: 08.12.1993
(73) Proprietor: NIKON CORPORATION, Tokyo (JP)
(72) Inventor: Kimura, Yoichi, Koganei-shi, Tokyo (JP); Horibe, Toshihiko, Yamato-shi, Kanagawa-ken (JP); Watanabe, Koji, Kawasaki-shi, Kanagawa-ken (JP)
(74) Representative: Burke, Steven David

(56) References cited:
- EP-A- 0 525 215
- DE-A- 4 035 418
- DATABASE WPI Derwent Publications Ltd., London, GB; AN 91-263167 & JP-A-3 172 369 (HOYA CORP.) 25 July 1991

## Description

The present invention relates to a coating composition adapted for use on molded plastic articles, and a plastic lens coated with the composition.

Molded plastic articles find wide use exploiting their advantages of light weight, ease of working and high impact strength, but are associated with drawbacks of insufficient hardness allowing them to become easily scratched, susceptibility to solvents, tendency to become charged causing dust absorption and insufficient heat resistance. Such articles have been inferior to molded inorganic glass articles for use as spectacle lenses and window panes.

For this reason, it has been proposed to apply a protective coating to the molded plastic article, and many coating compositions have been proposed for this purpose. Such proposals include, for example, a coating composition containing an organic silicon compound or a hydrolyzed product thereof as a principal component (resinous component or film forming component) which is described in Japanese Patent Laid-open Application No. 52-11261 and which was expected to provide a hard coating similar to the inorganic coating. This composition is commercially utilized for spectacle lenses.

However, since even this composition is still unsatisfactory in scratch resistance, there has been proposed, for example, a composition additionally containing colloidal silica sol, as described in Japanese Patent Laid-open Application No, 53-111336, and this composition is also commercially used for spectacle lenses.

On the other hand, conventional spectacle lenses have mostly been produced by in-mold polymerization of a monomer, diethyleneglycol bisallylcarbonate. The resulting lens, having a refractive index of about 1.50 which is lower than the refractive index of 1.52 of glass lenses, requires a thicker rim portion in spectacles for short-sighted eyes, a major drawback disliked by the users. Also, in reading glasses, the central portion of the lens becomes thicker, and such lenses are disliked by users for this reason, also.

There have been developments of monomers of a higher refractive index than that of diethyleneglycol bisallylcarbonate, as described in the Japanese Patent Laid-open Applications Nos. 55-13747, 56-166214, 57-23611 and 57-54901, and, plastics lenses of medium to high refractive index (n_{d} = 1.54 - 1.60) are being commercialized by several manufacturers. Also there has recently been proposed a plastic lens of refractive index exceeding 1.65.

The silica sol-containing coating composition mentioned above is also used in these lenses.

However, such a silica sol-containing coating composition has the disadvantage of a non-aesthetic appearance, showing interference fringes on the coating. Also, on such a coating on the lens, there is often formed an antireflective film, consisting of a multi-layered film of inorganic oxides based on the optical interference theory. Such an antireflective film exhibits, for example, a very pale green reflection and such a reflected color has the disadvantage of appearing uneven, depending on its position on the lens surface.

The present Applicant is aware also of JP-A-03 172 369 which describes a coating composition for plastics lenses, consisting of an organic silicon compound (for example, γ-glycidoxyproplyltrimethoxysilane) and tin oxide particles coated with tungsten oxide particles. The latter component, however, has a refractive index of 1.82 to 1.86 which contrasts with even the high refractive index values of some plastics lenses.

The present invention seeks to provide a coating composition that can form, on a molded plastics article of a high refractive index exceeding n_{d} = 1.60, a coated film which exhibits neither interference fringes nor unevenness in the reflected color, and a lens coated with such a composition.

In accordance with the present invention, there is now provided a coating composition comprising:
(a) an organic silicon compound of the general formula:

   R¹ ₐR² _{b}Si(OR³)_{4-(a+b)}

   in which R¹ is an organic functional group or a hydrocarbon group having 4 to 14 carbon atoms and containing a double bond;
   R² is a hydrocarbon or halogenated hydrocarbon group having 1 to 6 carbon atoms;
   R³ is an alkyl, alkoxyalkyl or acyl group having up to 4 carbon atoms;
   a is 0 or 1, b is 0, 1 or 2, and (a+b) is 1 or 2; and
(b) a metal oxide sol in which the colloidal particles of the metal oxide are composed of 100 parts by weight of a core of SnO₂ and 2 to 100 parts by weight of a coating of a composite of WO₃ and SnO₂ having a weight ratio of WO₃/SnO₂ of 0.5 to 100 bonded onto the surface of the core, the composition containing 10 to 400 parts by weight of the metal oxide sol (b) per 100 parts by weight of the organic silicon compound (a).

In accordance with the invention, there is provided also a method for coating an optical lens of a plastics material having a refraction index of 1.6 or more, which comprises applying to the lens a coating of such a composition and curing the composition.

### Component (a)

Among the compounds of the general formula (I) are those having an epoxy group as the functional group represented by R¹. Such compounds may be represented by the following general formula (II) or (III): 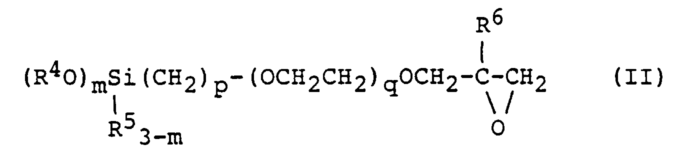 wherein:
R⁴ stands for an alkyl, alkoxyalkyl or acyl radical with 1 to 4 carbon atoms;
R⁵ stands for a hydrocarbon or halogenated hydrocarbon radical with 1 to 6 carbon atoms;
R⁶ stands for a hydrogen atom or a methyl radical;
m is 2 or 3;
p is an integer from 1 to 6; and
q is 0, 1 or 2; 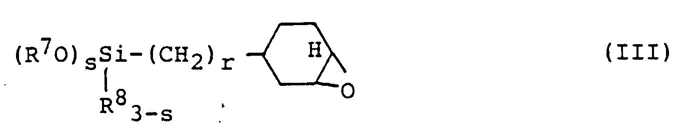
wherein:
R⁷ stands for an alkyl, alkoxyalkyl or acyl radical with 1 to 4 carbon atoms;
R⁸ stands for a hydrocarbon or halogenated hydrocarbon radical with 1 to 4 carbon atoms;
s is 2 or 3; and
r is an integer from 1 to 4.

The compounds represented by the general formulas (II) and (III) having an epoxy group are called epoxysilanes in general terms.

Examples of such epoxysilane include γ-glycidoxypropyltrimethoxysilane, γ-glycidoxypropyltriethoxysilane, γ-glycidoxypropyltrimethoxyethoxysilane, γ-glycidoxypropyltriacetoxysilane, γ-glycidoxypropylmethyldimethoxysilane, γ-glycidoxypropylmethyldiethoxysilane, and β-(3,4-epoxycyclohexyl)ethyltriethoxysilane.

Also examples of the compounds of the general formula (I), other than those having an epoxy group as the functional group represented by R¹ but including those in which a = 0, include trialkoxysilanes, triacyloxysilanes and trialkoxyalkoxysilanes such as methyltrimethoxysilane, methyltriethoxysilane, vinyltrimethoxysilane, vinyltriethoxysilane, vinyltriacetoxysilane, vinyltrimethoxyethoxysilane, γ-methacryloxypropyltrimethoxysilane, aminomethyltrimethoxysilane, 3-aminopropyltrimethoxysilane, 3-aminopropyltriethoxysilane, phenyltrimethoxysilane, phenyltriethoxysilane, γ-chloropropyltrimethoxysilane, γ-mercaptopropyltriethoxysilane and 3,3,3-trifluoropropyltrimethoxysilane.

The above-cited examples of the compounds of the general formula (I) are all trifunctional having three OR³ combined to the Si atom (a+b = 1), but corresponding bifunctional compounds having two OR³ groups (a+b = 2) can naturally be utilized also. Examples of such corresponding bifunctional compounds include dimethyldimethoxysilane, diphenyldimethoxysilane, methylphenyldimethoxysilane, methylvinyldimethoxysilane and dimethyldiethoxysilane.

The compounds of the general formula (I) may be used alone, or as a mixture of at least two compounds depending upon the desired purpose.

In particular, when a bifunctional compound is employed, it is preferably employed in combination with a trifunctional compound. In such combined use, 2 > (a + b) > 1 on average.

Furthermore, a corresponding tetrafunctional compound with a+b = 0 may also be used in combination. Examples of such corresponding tetrafunctional compound include methyl silicate, ethyl silicate, isopropyl silicate, n-propyl silicate, n-butyl silicate, t-butyl silicate and sec-butyl silicate.

The compound of the general formula (I) may be used in its original form, but is preferably used as the hydrolyzed product thereof, for the purpose of increasing the reaction rate and reducing the curing temperature. In case of combined use of at least two compounds with a same number of functional groups among the bi- to tetra-functional compounds, or in case of combined use of at least two compounds with different numbers of functional groups, such compounds may be combined after hydrolysis, or may be combined first and then hydrolyzed together. The hydrolysis liberates an alcohol HOR³, and the compound of the general formula (I) is converted into a corresponding silanol: 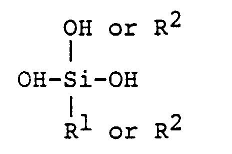 Silanol shows rapid dehydrating condensation, thus generating an oligomer. Consequently, the hydrolyzed product may be left to stand for 1 to 24 hours after hydrolysis, in order to encourage this reaction.

### Component (b)

This component is a modified sol, which is a colloidal dispersion, in a dispersion medium, of double-structured colloid particles consisting of nuclei of colloid particles of tin oxide (sol), surrounded perfectly or imperfectly by colloid particles of tin oxide-tungsten oxide complex (sol). The tin oxide colloid particles constituting nuclei generally have a particle size of 4 to 50 nm. The surrounding complex colloid particles generally have a particle size of 2 to 7 nm. The tin oxide particles constituting the nuclei are positively charged. For this reason, they show coagulation (gelation) if they are mixed with component (a), which has a negative charge because of -SiO⁻H⁺ structure. On the other hand, the complex particles are negatively charged, and do not show such coagulation even if mixed with the component (a).

The tin oxide-tungsten oxide complex sol is generally produced by adding an aqueous solution of sodium stannate, under strong agitation at room temperature, to an aqueous solution of tungstic acid, obtained by ion exchange of an aqueous solution of sodium tungstate. The weight ratio of WO₃/SnO₂ in the complex sol is from 0.5 to 100. A ratio below 0.5 or above 100 provides a coated film of inferior performance in the preparation and use of the coating composition of the present invention.

The modified sol can be prepared by adding to an aqueous sol of tin oxide in an amount of 100 parts by weight of SnO₂, an aqueous sol of the complex in an amount of 2 to 100 parts by combined weight of WO₃ and SnO₂ under strong agitation at room temperature. In this case, too, an amount below 2 parts or above 100 parts provides a film of inferior performance in the preparation and use of the coating composition of the present invention. The double-structured colloid particles of the modified sol generally have a particle size of 4.5 to 60 nm. The mixing of the aqueous sol of tin oxide and the aqueous sol of the complex is thought to cause chemical bonding of the two, and the resulting modified sol is thought to exist stably for this reason. Such a modified sol itself is already known, as described in the Japanese Patent Laid-open Application No. 3-217230.

In the present invention, there may be employed a curing catalyst (c), as explained below, for the purpose of accelerating the reaction and effecting curing at a lower temperature.

### Component (c):

The curing catalyst (c) is employed when required in forming a coated film of a three-dimensional network structure by polymerization of component (a), but it should not deteriorate the stability of the coating composition. Examples of such a catalyst are listed as (1) to (8) in the following:
(1) Amines: such as monoethanolamine, diethanolamine, isopropanolamine, ethylenediamine, isopropylamine, diisopropylamine, morpholine, triethanolamine, diaminopropane, aminoethylethanolamine, dicyanamide, triethylenediamine and 2-ethyl-4-methylimidazole;
(2) Metal complexes: such as aluminum chelate represented by a general formula AℓXₙYₐ₋ₙ, wherein X stands for a group OL in which L is a lower alkyl group, Y is at least a ligand derived from a general formula M¹COCH₂COM² or M¹COCH₂COOM² in which M¹ and M² are lower alkyl groups, and n is 0, 1 or 2.
   Examples of particularly useful chelate in terms of solubility, stability and curing a catalyst include aluminum acetylacetonate, aluminum bisethylacetoacetate monoacetylacetonate, aluminum di-n-butoxide monoethylacetonate and aluminum di-isopropoxide monomethylacetoacetate.
   Other examples of such a metal complex include chromium acetylacetonate, titanium acetylacetonate, cobalt acetylacetonate, iron (III) acetylacetonate, manganese acetylacetonate, nickel acetylacetonate, EDTA, and complexes of Aℓ, Fe, Zn, Zr and Ti;
(3) Metal alkoxides: such as aluminum triethoxide, aluminum tri-n-propoxide, aluminum tri-n-butoxide, tetraethoxytitanium, tetra-n-butoxy titanium and tetra-i-propoxy titanium;
(4) Organometallic salts: such as sodium acetate, zinc naphthenate, cobalt naphthenate, zinc octylate and tin octylate;
(5) Perchlorate salts: such as magnesium perchlorate or ammonium perchlorate;
(6) Organic acids and their anhydrides: such as malonic acid, succinic acid, tartaric acid, adipic acid, azelaic acid, maleic acid, o-phthalic acid, terephthalic acid, fumaric acid, itaconic acid, oxaloacetic acid, succinic anhydride, maleic anhydride, itaconic anhydride, 1,2-dimethylmaleic anhydride, phthalic anhydride, hexahydrophthalic anhydride and naphthalic anhydride;
(7) Lewis aicds: such as ferric chloride or aluminum chloride; and
(8) Metal halides: such as stannous chloride, stannic chloride, tin bromide, zinc chloride, zinc bromide, tetrachlorotitanium, titanium bromide, thalium bromide, germanium chloride, hafnium chloride, lead chloride and lead bromide.

The above catalysts may be employed individually or as a mixture of two or more. Particularly when component (a) has an epoxy group, there may be employed a catalyst which also serves as a catalyst for ring-cleaving polymerization of the epoxy group.

Aluminum chelate is a particularly preferred catalyst.

Also according to the invention, there may be employed a solvent (d) as explained in the following, for the purpose of improving the flowability in the film coating and improving the smoothness of the cured film.

### Component (d)

The solvent (d) is employed when required, for maintaining the coating composition in liquid form or for reducing the viscosity thereof, and can for example be water, a lower alcohol, acetone, an ether, a ketone or an ester.

In the coating composition of the present invention, per 100 parts by weight (solid) of component (a), component (b) is used in an amount of 10 to 400 parts by weight, preferably 50 to 250 parts by weight, and, per 100 parts by weight of the components (a) and (b) in total, component (c) is used in an amount of 0.00001 to 20 parts by weight.

The component (d) may be employed in a suitable amount, according to the viscosity of the composition.

In addition to components (a) to (d), there may be employed, if required, various additive materials for the purpose, for example, of improving the adhesion to the substrate (molded article) or improving the weather resistance, or improving the stability of the coating composition.

Examples of such additive materials include pH regulating materials, viscosity regulating agents, levelling agents, matting agents, dyes, pigments, stabilizers, ultraviolet absorbing agents and antioxidants.

Furthermore, there may be employed in combination epoxy resin or other organic polymers for the purpose of improving the dyeability of the coated film. Examples of such epoxy resin include polyolefinic epoxy resins utilized for paints and for molding, alycyclic epoxy resin such as cyclopentadieneoxide, cyclohexeneoxide or polyglycidyl ester, polyglycidylether, epoxylated vegetable oils, epoxynovolac composed of novolac phenolic resin and epichlorhydrin, and glycidyl methacrylatemethyl methacrylate copolymer.

Examples of the other organic polymers include polyol, cellulose resins, and melamine resin.

Furthermore, various surfactants may be employed in the coating composition, for the purpose of improving the flowability during coating and also improving the smoothness of the coated film thereby reducing the friction coefficient of the coated surface For these purposes, particularly effective are block and graft copolymers of dimethylsiloxane and alkyleneoxide, and fluorinated surfactants.

Also in certain cases, there may be added inorganic fillers such as silica sol, antimony oxide sol or fine diamond particles, to the extent that they do not act contrary to the objects of the present invention.

The compositions of the present invention are particularly well suited for coating onto molded plastics articles. In terms of the material constituting such molded articles, the composition of the present invention may be coated, for example, on polymethyl methacrylate or a copolymer thereof, acrylonitrile-styrene copolymer, polycarbonate, cellulose acetate, polyvinyl chloride, polyethylene terephthalate, epoxy resin, unsaturated polyester resin, polyurethane resin or CR-39 polymer.

In terms of the form of the molded article, the composition of the present invention may be coated on an ingot, a wire or a film.

In terms of the function of the molded article, the composition of the present invention may be coated on optical products, particularly a lens for a camera, a spectacle lens, a mirror or a prism.

The composition of the present invention is particularly useful as an antiscratch film for spectacle lens molded with resin of a high refractive index at least equal to n_{d} = 1.60.

In addition to the molded plastic articles, the composition of the present invention may be coated on inorganic glass, timber or metallic articles.

Coating may be achieved by ordinary coating means such as brush coating, dipping roller coating, spin coating, spray coating or flow coating.

It is furthermore possible to coat the composition of the present invention on a mold and to pour and polymerize the material for the substrate thereby forming the molded plastic article, or to coat the composition of the present invention on a molded article, then to bring the surface of the uncured coated film in contact with a mold and to cure the coated film thereon.

The coating composition of the present invention is turned, after coating, into a hard film by a heating treatment in most cases. A heating temperature of ca. 50 to 200°C, preferably 80 to 140°C, is sufficient for this purpose.

The thickness of the coated film, after drying, is generally in the range of 0.3 to 30 µm, preferably 0.5 to 10 µm.

The coated film is transparent and is excellent in hardness, particularly in the scratch resistance. Thus it can prevent the deterioration of appearance and lens performance resulting from the scratches which have been the inherent drawback of the molded plastic articles, and there can be obtained molded articles of extremely high value of merchandice.

The following Example illustrates the present invention.

As explained above, the present invention provides a coating composition which has following features:
(1) When a cured coated film is formed on a plastics spectacle lens of a medium to high refractive index and an antireflection film is formed thereon, the reflected color is free from unevenness;
(2) The coated film is excellent in scratch resistance, abrasion resistance, surface hardness, flexibility, transparency, heat resistance and moisture resistance;
(3) The coated film is extendable and shows little crack formation on the film surface even when the substrate is bent;
(4) The coated film shows little contraction at curing, thus being capable of avoiding a curling effect when coated on a thin film or the like;
(5) The coated film is excellent in antistatic activity, thus being relatively free from smearing;
(6) The coated film can be dyed with a disperse dye;
(7) The coated film has a high surface reflectance;
(8) The coated film shows satisfactory adhesion to an antireflective film or a metallic vapor deposition film; and
(9) The coated film shows satisfactory sliding characteristics (low friction coefficient).

### EXAMPLE

### (1) Preparation of preliminary composition A

248 parts by weight of γ-glycidoxypropylmethyldiethoxysilane were charged in a reaction vessel provided with a rotor, and, under vigorous agitation with a magnetic stirrer, 36 parts by weight of 0.05N aqueous solution of hydrochloric acid were added at once.

The reaction mixture was non-homogeneous immediately after the addition, but turned into a homogeneous, colorless and transparent solution, with heat generation, within several minutes. Agitation was continued for one hour to obtain a hydrolyzed product corresponding to component (a).

The hydrolyzed product was subjected to the addition of 56.6 parts by weight of ethanol and 53.4 parts by weight of ethylene glycol as component (d), and then 4.7 parts by weight of aluminum acetylacetonate as component (c), and a preliminary composition A was obtained by mixing.

### (2) Preparation of preliminary composition B

212.4 parts by weight of γ-glycidoxypropyltrimethoxysilane were charged in a reaction vessel provided with a rotor, and the temperature in the vessel was maintained at 10°C. Under vigorous agitation with a magnetic stirrer, 48.6 parts by weight of 0.01 N aqueous hydrochloric acid were added dropwise. Cooling was terminated immediately after the end of dropwise addition, and there was obtained a hydrolyzed product corresponding to component (a), in homogeneous, colorless and transparent solution

The hydrolyzed product was subjected to the addition of 77.1 parts by weight of ethanol and 37.7 parts by weight of ethylene glycol as component (d), and then 7.65 parts by weight of aluminum acetylacetonate as component (c), and a preliminary composition B was obtained by mixing.

### (3) Preparation of coating compositions

An aqueous complex sol was prepared by adding an aqueous solution of sodium stannate, under strong agitation at room temperature, to an aqueous solution of tungstic acid, prepared by ion exchange of an aqueous solution of sodium tungstate. The sol had a weight ratio WO₃/SnO₂ of about 1, and a particle size of about 4 - 5 nm.

Commercially available aqueous tin oxide sol (particle size ca. 7 - 40 nm) was prepared in an amount of 100 parts by weight of SnO₂, and modified sol (s.g. = 1.030) was prepared by adding under strong agitation at room temperature, the above complex sol in an amount of 25 - 60 parts by combined weight of WO₃ and SnO₂. Thereafter, a purifying process was conducted to obtain high concentration modified sol with s.g. = ca. 1.172. The colloid particles of the sol had a double structure in which nuclei of tin oxide particles of a particle size of ca. 7 - 40 nm were surrounded by complex particles of a particle size of ca. 4 - 5 nm.

The preliminary compositions A and B prepared as described above were measured in glass containers, in different proportions as shown in Table 1, in total amount of 100 parts by weight (not solid content), and to each was added 50 parts by weight (not solid content) of the high concentration modified sol prepared as described above and 0.4 parts by weight of a silicone surfactant, followed by agitation, to obtain a coating composition in homogeneous, colorless and transparent solution.

### (4) Coating

Each of the coating compositions was coated by dipping (pull-up speed of 10 cm/min.) on a commercially available polyurethane spectacle lens with a refractive index of n_{d} = 1.66, and was cured by heating for 2 hours at 100°C.

### (5) Evaluation

The lenses with the cured coated films obtained in (4) were subjected to the following tests, for evaluating the performance of the coated film:

### (i) Scratch resistance test

Scratch resistance was tested by rubbing the film surface with steel wool #0000, and was evaluated as follows:
- ++: no scratch even with strong rubbing;
- +: slight scratches by considerably strong rubbing;
- -: scratched even with weak rubbing.

The lens without the coated film was evaluated as (-).

### (ii) Appearance

On the cured coated film, an ordinary antireflection film was formed by vacuum vapor deposition and evaluated as follows by visual observation of the reflected color:
- ++: no unevenness in the reflected color;
- +: some unevenness in the reflected color;
- -: significant unevenness in the reflected color.

### (iii) Adhesion

The lens with the cured coated film was immersed in hot water of 90°C for 2 hours. Then the coated film was cut with a knife with a pitch of 1 mm in the vertical and horizontal directions to form checkerboard squares. Then a cellophane adhesive tape "Cellotape" (trade name) supplied by Nichiban Co., Ltd. was applied firmly, and rapidly peeled off in a direction perpendicular to the coated film, and the number of checkerboard squares of the coated film which were peeled off was counted. The number X of such peeled squares is represented as a ratio X/100. A smaller value of X indicates better adhesion.

### (iv) Dyeability

The lens with cured coated film was immersed in a bath of dispersion dyes (mixture of red, yellow and blue) at 90°C, for 30 minutes, and the level of dyeing was evaluated by optical transmittance.

The results of these evaluations are shown in Table 1.

### Reference Example 1

A coating composition was prepared and evaluated in the same manner as that of the above Example, except that the tin oxide-tungsten oxide complex colloid was replaced by a commercially available silica sol (dispersed in methanol, average particle size 13 ± 1 nm, solid content 20%).

### Reference Example 2

A coating composition was prepared and evaluated in the same manner as that of the above Example, except that the tin oxide-tungsten oxide complex colloid was replaced by a commercially available antimony pentoxide sol (average particle size 15 nm, solid content 20%).

The results of evaluations are also shown in Table 1.

**Table 1**

| | Preliminary composition | | Scratch resistance | Appearance | Adhesion | Dyeability (%) |
|---|---|---|---|---|---|---|
| | A | B | | | | |
| Example | | | | | | |
| 1 | 0 | 100 | ++ | ++ | 0/100 | 72.4 |
| 2 | 20 | 90 | ++ | ++ | 0/100 | 66.3 |
| 3 | 20 | 80 | ++ | ++ | 0/100 | 61.9 |
| 4 | 30 | 70 | ++ | ++ | 0/100 | 56.8 |
| 5 | 40 | 60 | ++ | ++ | 0/100 | 49.8 |
| 6 | 50 | 50 | ++ | ++ | 0/100 | 40.5 |
| Reference Example | | | | | | |
| 1 | 0 | 100 | ++ | - | 0/100 | 75.2 |
| 2 | 0 | 100 | + | + | 7/100 | 75.6 |

## Claims

1. A coating composition comprising:
(a) an organic silicon compound of the general formula:
R¹ ₐR² _{b}Si(OR³)_{4-(a+b)}
in which
R¹ is an organic functional group or a hydrocarbon group having 4 to 14 carbon atoms and containing a double bond;
R² is a hydrocarbon or halogenated hydrocarbon group having 1 to 6 carbon atoms;
R³ is an alkyl, alkoxyalkyl or acyl group having up to 4 carbon atoms;
a is 0 or 1, b is 0, 1 or 2, and (a+b) is 1 or 2; and
(b) a metal oxide sol in which the colloidal particles of the metal oxide are composed of 100 parts by weight of a core of SnO₂ and 2 to 100 parts by weight of a coating of a composite of WO₃ and SnO₂ having a weight ratio of WO₃/SnO₂ of 0.5 to 100 bonded onto the surface of the core, the composition containing 10 to 400 parts by weight of the metal oxide sol (b) per 100 parts by weight of the organic silicon compound (a).

2. A coating composition according to claim 1, wherein R¹ is an organic group containing an epoxy group.

3. A coating composition according to claim 1 or claim 2, wherein the organic silicon compound (a) is in the form of its hydrolysis product.

4. A coating composition according to any one of claims 1 to 3, which comprises also
(c) an amine, a metal complex, a metal alkoxide, an organometallic salt, a perchlorate, an organic acid, an organic acid anhydride, a Lewis acid or a metal halide or a combination of any two or more thereof as a curing catalyst in an amount of 0.00001 to 20 parts by weight per 100 parts by weight of components (a) and (b) combined.

5. A coating composition according to any one of claims 1 to 4, wherein the SnO₂ forming the core of the colloidal particles has a particle size of 4 to 50 nm.

6. A coating composition according to any one of claims 1 to 5, wherein the WO₃/SnO₂ composite forming the coating of the colloidal particles has a particle size of 2 to 7 nm.

7. A coating composition according to any one of claims 1 to 6, wherein the colloidal particles of the metal oxide sol have a particle size of 4.5 to 60 nm.

8. A method for coating an optical lens of a plastics material having a refractive index of 1.6 or more, which comprises applying to the lens a coating of a composition according to any one of claims 1 to 7, and curing the composition.

9. A method according to claim 8, wherein the plastics material is a polycarbonate or a polyurethane resin.

10. A method according to claim 8 or claim 9, which comprises applying to the cured coating one or more antireflection films.

## Patentansprüche

1. Beschichtungszusammensetzung, welche aufweist:
(a) eine organische Siliciumverbindung der allgemeinen Formel:
R¹ ₐR² _{b}Si(OR³)_{4-(a+b)},
wobei
R¹ eine organische funktionelle Gruppe oder eine Kohlenwasserstoffgruppe mit 4 bis 14 Kohlenstoffatomen ist, welche eine Doppelbindung enthält,
R² eine Kohlenwasserstoff- oder eine halogenierte Kohlenwasserstoffgruppe mit 1 bis 6 Kohlenstoffatomen ist,
R³ eine Alkyl-, Alkoxyalkyl- oder Azylgruppe mit bis zu vier Kohlenstoffatomen ist,
a = 0 oder 1 , b = 0, 1 oder 2 und (a+b) = 1 oder 2 ist,
und
(b) ein Metalloxidsol, bei dem die kolloidalen Teilchen des Metalloxids zusammengesetzt sind aus 100 Gewichtsteilen eines Kerns aus SnO₂ und 2 bis 100 Gewichtsteilen einer aus WO₃ und SnO₂ zusammengesetzten Beschichtung mit einem Gewichtsverhältnis von WO₃/SnO₂ von 0,5 bis 100, wobei die Beschichtung auf die Oberfläche des Kerns aufgebunden ist und die Zusammensetzung 10 bis 400 Gewichtsteile des Metalloxidsols (b) pro 100 Gewichtsteilen der organischen Siliciumverbindung (a) enthält.

2. Beschichtungszusammensetzung nach Anspruch 1, wobei
R¹ eine eine Epoxygruppe enthaltende organische Gruppe ist.

3. Beschichtungszusammensetzung nach Anspruch 1 oder Anspruch 2, wobei die organische Siliciumverbindung (a) in Form ihres Hydrolyseproduktes vorliegt.

4. Beschichtungszusammensetzung nach einem der Ansprüche 1 bis 3, welche weiterhin aufweist:
(c) ein Amin, einen Metallkomplex, ein Metallalkoxid, ein organometallisches Salz, ein Perchlorat, eine organische Säure, ein organisches Säureanhydrid, eine Lewis-Säure oder ein Metallhalid oder eine Kombination zweier oder mehrerer aus diesen als Härtungskatalysator in einem Anteil von 0,00001 bis 20 Gewichtsteilen pro 100 Gewichtsteilen der Komponenten (a) und (b) zusammengenommen.

5. Beschichtungszusammensetzung nach einem der Ansprüche 1 bis 4, wobei das den Kern der kolloidalen Teilchen bildende SnO₂ eine Teilchengröße zwischen 4 und 50 nm hat.

6. Beschichtungszusammensetzung nach einem der Ansprüche 1 bis 5, wobei die die Beschichtung der kolloidalen Teilchen bildende WO₃/SnO₂-Zusammensetzung eine Teilchengröße zwischen 2 und 7 nm hat.

7. Beschichtungszusammensetzung nach einem der Ansprüche 1 bis 6, wobei die kolloidalen Teilchen des Metalloxidsols eine Teilchengröße zwischen 4,5 und 60 nm haben.

8. Verfahren zur Beschichtung einer optischen Linse aus einem Kunststoffmaterial mit einem Brechungsindex von 1,6 oder größer, welches das Aufbringen einer Beschichtung mit einer Zusammensetzung gemäß einem der Ansprüche 1 bis 7 und das Härten der Zusammensetzung aufweist.

9. Verfahren nach Anspruch 8, wobei
das Kunststoffmaterial ein Polycarbonat oder ein Polyurethanharz ist.

10. Verfahren nach Anspruch 8 oder Anspruch 9,
welches das Aufbringen eines oder mehrerer Antireflexionsschichten auf die gehärtete Beschichtung aufweist.

## Revendications

1. Composition de revêtement comprenant :
(a) un composé organique du silicium de formule générale :
R¹ ₐR² _{b}Si(OR³)_{4-(a+b)}
dans laquelle
R¹ est un groupe fonctionnel organique ou un groupe hydrocarboné ayant entre 4 et 14 atomes de carbone et contenant une double liaison;
R² est un groupe hydrocarboné ou un groupe hydrocarboné halogéné ayant entre 1 et 6 atomes de carbone;
R³ est un groupe alkyle ou acyle ayant jusqu'à 4 atomes de carbone;
a est 0 ou 1, b est 0, 1 ou 2, et (a+b) est 1 ou 2; et
(b) un sol d'un oxyde métallique, dans lequel les particules colloïdales de l'oxyde métallique sont composées de 100 parties en poids d'un noyau de SnO₂ et de 2 à 100 parties en poids d'un revêtement constitué d'un composite de WO₃ et SnO₂ ayant un rapport en poids de WO₃/SnO₂ compris entre 0,5 et 100 lié à la surface du noyau, la composition contenant entre 10 et 400 parties en poids de sol de l'oxyde métallique (b) pour 100 parties en poids du composé organique du silicium (a).

2. Composition de revêtement selon la revendication 1, dans laquelle R¹ est un groupe organique contenant un groupe époxy.

3. Composition de revêtement selon la revendication 1 ou la revendication 2, dans laquelle le composant organique de silicium (a) est sous la forme du produit de son hydrolyse.

4. Composition de revêtement selon l'une quelconque des revendications 1 à 3, qui comprend également, comme catalyseur de durcissement
(c) une amine, un complexe métallique, un alcoolate métallique, un sel organométallique, un perchlorate, un acide organique, un anhydride d'acide organique, un acide de Lewis ou un halogénure métallique ou une combinaison de deux quelconques ou plus d'entre eux en quantité comprise entre 0,00001 et 20 parties en poids pour 100 parties en poids de composants (a) et (b) combinés.

5. Composition de revêtement selon l'une quelconque des revendications 1 à 4, dans laquelle le SnO2 formant le noyau des particules colloïdales a une dimension de particules comprise entre 4 et 50 nm.

6. Composition de revêtement selon l'une quelconque des revendications 1 à 5, dans laquelle le composite WO₃/SnO₂ formant le revêtement des particules colloïdales a une dimension de particules comprise entre 2 et 7 nm.

7. Composition de revêtement selon l'une quelconque des revendications 1 à 6, dans laquelle les particules colloïdales du sol d'oxyde métallique ont une dimension de particules comprise entre 4,5 et 60 nm.

8. Procédé de revêtement d'une lentille optique d'un matériau de matière plastique ayant un indice de réfraction de 1,6 ou plus, qui comprend l'application à la lentille d'un revêtement d'une composition selon l'une quelconque des revendications 1 à 7, et le durcissement de la composition.

9. Procédé selon la revendication 8, dans lequel le matériau de matière plastique est une résine polycarbonate ou polyuréthanne.

10. Procédé selon la revendication 8 ou la revendication 9, qui comprend l'application au revêtement durci d'un ou plusieurs films antiréfléchissants.
